# EUROPEAN PATENT SPECIFICATION

(11) **EP 4 058 512 B1**
(45) Date of publication and mention of the grant of the patent: **02.12.2026**
(21) Application number: 20811934.7
(22) Date of filing: 04.11.2020
(51) Int. Cl.: C08K 5/20, C08K 5/00, C08L 53/00, C08L 23/08

(54) **THERMOPLASTIC ELASTOMER COMPOSITION**
THERMOPLASTISCHE ELASTOMERZUSAMMENSETZUNG
COMPOSITION D'ÉLASTOMÈRE THERMOPLASTIQUE

(30) Priority: 15.11.2019 US 201962935848 P
(43) Date of publication of application: 21.09.2022
(73) Proprietor: Dow Global Technologies LLC, Midland, MI 48674 (US)
(72) Inventor: LEE, Jong, Young, Lake Jackson, Texas 77566 (US); LIN, Yijian, Freeport, Texas 77541 (US); ANDERSON, Kyle, D., Lake Jackson, Texas 77566 (US); STOILJKOVIC, Aleksandar, 8810 Horgen (CH); LORENZO, Arnaldo, T., 43006 Tarragona (ES); PESEK, Stacy, L., Lake Jackson, Texas 77566 (US); WEVERS, Ronald, 4530 NM Hoek (NL)
(74) Representative: Boult Wade Tennant LLP
(86) International application number: PCT/US2020/058807
(87) International publication number: WO 2021/096737

(56) References cited:
- WO-A1-2008/080111
- WO-A1-2015/042563
- WO-A2-2007/051115

## Description

### FIELD

The present invention is related to a thermoplastic elastomer composition; and more specifically, the present invention is related to a thermoplastic elastomer composition such as an olefinic block copolymer (OBC) resin composition including (a) at least one thermoplastic elastomer blended with (b) at least one specific nucleation agent; and to a film made from the resin composition such that the film has an improvement in elastic performance (e.g., retractive force, hysteresis, and immediate set).

### BACKGROUND

A thermoplastic elastomer such as an olefinic block copolymer (OBC) is known to provide a higher elasticity to a film structure compared to other polyolefins with the same crystallinity due to the OBC's unique molecular architecture. Because of OBC's unique molecular architecture, OBC has been used as the elastic component in film applications used to produce articles such as diaper and adult incontinence products because OBC has good processability. However, the film industry is still searching for a polyolefin film (e.g., a cast film) with improved elastic performance related to retractive force, hysteresis, and immediate set.

Various known resin compositions and processes have been described in the prior art. For example, U.S. Patent Application Publication No. US2015/0087758A1 discloses a resin composition including a polyolefin and other compounds such as a nucleation agent and an acid scavenger. The chemical formula of the nucleation agent is described in the above reference. The advantage of the resin composition is to improve physical properties of secant modulus in the machine direction (MD), tear strength in MD, clarity, and haze of a polyethylene blown film.

U.S. Patent Application Publication No. US2015/0086736A1 discloses a fabricated article made from a resin composition including: (1) a nucleation agent (the chemical formula is the same as the chemical formula described in US 2015/0087758 A1); and (2) a linear low polyethylene or a high-density polyethylene. The fabricated polyethylene article disclosed in the above reference is an extruded pipe.

U.S. Patent Application Publication No. US2006/0199930A1 discloses OBC (e.g., INFUSE^{™}, an OBC commercially available from The Dow Chemical Company); and the molecular architecture, the attributes, and the physical properties (e.g., elastic recovery, melting point, and the like.) of the OBC.
WO 2007/051115 A2 relates to polymer articles such as laminates, films, fabrics and fibers comprising a low crystallinity layer and a high crystallinity layer. WO 2008/080111 A1 relates to compositions comprising the following: a) at least one olefin multi-block interpolymer; b) at least one functionalized olefin-based polymer; and optionally c) at least one thermoplastic polyurethane.

None of the above prior art references discloses a resin composition that improves the elastic performance (e.g., retractive force, hysteresis, and immediate set) of a cast film of OBC. It is desired, therefore, to provide a resin composition that includes (a) a thermoplastic elastomer such as OBC blended with (b) a specific nucleation agent; and such that the resulting resin composition improves the elastic performance of a cast film made from the resin composition.

### SUMMARY

The present invention is directed to a thermoplastic elastomer resin composition including (a) a thermoplastic elastomer such as OBC; and (b) a specific nucleation agent (or nucleating agent) blended with the thermoplastic elastomer, component (a); and such that the use of the resulting blended resin composition improves the elastic performance (e.g., physical properties of elasticity such as retractive force, hysteresis, and immediate set) of a cast film made from the above resin blend composition. In a preferred embodiment, the present invention includes an OBC-containing resin composition and a cast film made from the OBC-containing resin composition. The cast film made from the OBC-containing resin composition advantageously exhibits improved physical properties of elasticity when the OBC-containing resin composition and the specific nucleation agent is used to manufacture the cast film.

The present invention relates to a thermoplastic elastomer resin composition as defined in claim 1, an elastic film as defined in claim 7 and an elastic laminate as defined in claim 13.

In one embodiment, the present invention includes a thermoplastic elastomer resin composition comprising:
(a) at least 75 weight percent of a thermoplastic elastomer (e.g., an olefinic block copolymer) having a density of from 0.855 g/cm³ to 0.890 g/cm³, and a melt index (I2) of from 0.5 g/10 min to 15 g/10 min; and
(b) from 0.1 weight percent to 1.0 weight percent of at least one nucleation agent having the structure: 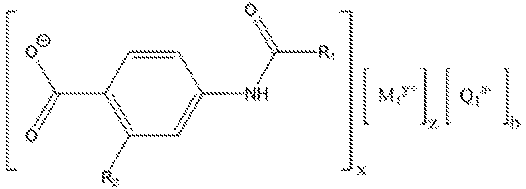 wherein R₁ is selected from the group consisting of a cyclopentyl group and moieties conforming to the structure of Formula (A); R₂ is selected from the group consisting of hydrogen and a hydroxyl group; Formula (A) is: 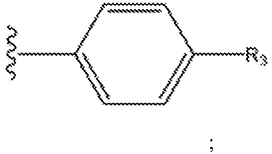 R₃ is selected from the group consisting of hydrogen, a halogen, methoxy, and phenyl; x is a positive integer; each M₁ is a metal cation; y is the valence of the cation; z is a positive integer; b is zero or a positive integer; when b is a positive integer, each Q₁ is a negatively-charged counterion and a is the valence of the negatively-charged counterion; and the values of x , y , z , a, and b satisfy the equation: x + (ab) = yz.

In another embodiment, the present invention includes an elastic film comprising at least one layer, wherein the at least one layer is formed from the above thermoplastic elastomer resin composition.

The above novel thermoplastic elastomer resin composition of the present invention has several advantages compared to known resin compositions of the prior art. For example, an OBC-containing resin composition of the present invention improves the elastic performance of a cast film made from the above OBC-containing resin composition. For example, an OBC-containing resin composition of the present invention provides an elastic film that has: (1) a retractive force percent change of, for example, at least 5 %, (2) a hysteresis percent change of, for example, at least 3 %, and (3) an immediate set percent change of, for example, at least 7 % when such properties are compared to the same properties of another same film having no nucleation agent.

### DETAILED DESCRIPTION

As used throughout this specification, the abbreviations given below have the following meanings, unless the context clearly indicates otherwise: "=" means "equal to"; @ means "at"; "<" means "less than"; ">" means "greater than"; "≥" means "greater than or equal to"; "≤" means "less than or equal to"; g = gram(s); g/10 min = gram(s) per 10 minutes; mg = milligram(s); kg = kilograms; kg/m3 = kilograms per cubic meter; kg/hr = kilograms per hour; L = liter(s); mL = milliliter(s); mL/min = milliliter(s) per minute; g/L = grams per liter; RPM = revolutions per minute; Mw = molecular weight by weight; m = meter(s); Mn = number average molecular weight; Mw/Mn = molecular weight distribution; µm = microns: µL = microliters; mm = millimeter(s); cm = centimeter(s); min = minute(s); s = second(s); hr = hour(s);
°C = degree(s) Celsius; mPa.s = millipascals-seconds; kPa = kilopascals; Pa.s/m2 = pascals-seconds per meter squared; mg KOH/g = hydroxyl value in terms of milligrams of potassium hydroxide per gram of polyol; cells/mm2 is pore density value in terms of the number of cells per millimeter squared; % = percent, vol % = volume percent; and wt % = weight percent.

All percentages stated herein are weight percentages (wt %), unless otherwise indicated.

Temperatures are in degrees Celsius (°C), and "ambient temperature" means between 20 °C and 25 °C, unless specified otherwise.

Thermoplastic elastomers include, for example, block copolymers; polyolefin elastomers (POE); and mixtures thereof. The block copolymers can include, for example, (ai) olefinic block copolymer (OBC); (aii) styrene block copolymers (SBC); and mixtures thereof.

The olefinic block copolymers (OBC) are a family of known polyethylene interpolymers containing high density "hard blocks" and low density "soft blocks" and are produced, for example, in a conventional single loop reactor in the presence of two or more catalysts and a chain shuttling agent. In one embodiment, the OBC useful in the present invention is, for example, polyethylene block copolymer. In another embodiment, the OBC useful in the present invention can include commercially available compounds such as INFUSETM 9100, INFUSETM 9500, INFUSETM 9000 and INFUSETM 9507 (available from The Dow Chemical Company).

The OBC useful in the present invention can include a block copolymer having several beneficial properties. For example, the density of the OBC is generally from 0.855 g/cm³ to 0.890 g/cm³ in one embodiment; from 0.860 g/cm³ to 0.890 g/cm³ in another embodiment; and from 0.870 g/cm³ to 0.890 g/cm³ in still another embodiment, as measured by the method described, for example, in ASTM D792.

For example, the melt index (I2) of the OBC is generally from 0.5 g/10 min to 15 g/10 min in one embodiment; from 0.5 g/10 min to 9.0 g/10 min in another embodiment; and from 0.9 g/10 min to 6.0 g/10 min in still another embodiment, as measured by the method described, for example, in ASTM D1238.

For example, the OBC has a molecular weight distribution of Mw/Mn of generally greater than 1.0 but lower than 4.0 in one embodiment; from 1.5 to 3.0 in another embodiment; from 2.1 to 2.9 in still another embodiment, and from 2.3 to 2.7 in yet another embodiment; as measured by a GPC method described herein below.

For example, the OBC has at least one melting point (Tm, in °C) that corresponds to the following Equation (I): $Tm > - 2002.9 + 4538.5 * \left(density\right) - 2422.2 * \left(density\right) 2$ Equation (1).

In other embodiments, the OBC may comprise one or more hard blocks and one or more soft blocks. As is known in the art, a "hard block" is the segment of polyethylene with a low octene comonomer content and resulting in high crystallinity; and a "soft block" is the segment of polyethylene with a high octene comonomer content and resulting in low crystallinity. A description of hard and soft segments can be found, for example, in U.S. Patent Application Publication No. US2006/0199930 A1. For example, the weight percent of the hard block in the OBC is from 5 wt % to 35 wt % in one general embodiment.

In one general embodiment, the concentration of the OBC used in the present invention is at least 75 wt %; at least 80 wt % in another embodiment, at least 85 wt % in still another embodiment, and at least 90 wt % in yet another embodiment, based on the total components of the resin composition. In other embodiments, the concentration of the OBC is, for example, from 75 wt % to 99.90 wt % in one general embodiment; from 80 wt % to 99.80 wt % in another embodiment, from 85 wt % to 99.5 wt % in still another embodiment; and from 85 wt % to 99.0 wt % in yet another embodiment, based on the total components of the resin composition.

In another embodiment, the block copolymer can be styrene block copolymers (SBC) such as styrene-isoprene-styrene (SIS); styrene-butadiene-styrene (SBS); styrene-ethylenebutylene-styrene (SEBS); and mixtures thereof. In another embodiment, the SBC useful in the present invention can include commercially available compounds such as Kraton^{™} D series products; and Kraton^{™} G series products (available from Kraton Corporation Company).

In still another embodiment, the thermoplastic elastomer can be (aiii) polyolefin elastomers (POE) such as polyethylene elastomer; polypropylene elastomer; and mixtures thereof. In another embodiment, the polyolefin elastomer useful in the present invention can include commercially available compounds such as AFFINITY^{™} EG 8200G, AFFINITY^{™} 8852G VERSIFY^{™} 3300 (all available from The Dow Chemical Company); and mixtures thereof.

The polyolefin elastomer useful in the present invention can include an elastomer having several beneficial properties. For example, the density of the polyolefin elastomer is generally from 0.855 g/cm³ to 0.890 g/cm³ in one embodiment; from 0.860 g/cm³ to 0.890 g/cm³ in another embodiment; and from 0.870 g/cm³ to 0.890 g/cm³ in still another embodiment, as measured by the method described, for example, in ASTM D792.

For example, the melt index (I2) of the polyolefin elastomer is generally from 0.5 g/10 min to 15 g/10 min in one embodiment; from 0.5 g/10 min to 9.0 g/10 min in another embodiment; and from 0.9 g/10 min to 6.0 g/10 min in still another embodiment, as measured by the method described, for example, in ASTM D1238.

In one general embodiment, the concentration of the polyolefin elastomer used in the present invention is at least 75 wt %; at least 80 wt % in another embodiment, at least 85 wt % in still another embodiment, and at least 90 wt % in yet another embodiment, based on the total components of the resin composition. In other embodiments, the concentration of the polyolefin elastomer is, for example, from 75 wt % to 99.90 wt % in one general embodiment; from 80 wt % to 99.80 wt % in another embodiment, from 85 wt % to 99.5 wt % in still another embodiment; and from 85 wt % to 99.0 wt % in yet another embodiment, based on the total components of the resin composition.

The nucleation agent, component (b), useful in the present invention includes, for example, at least one nucleation agent having the following general chemical Structure (I): 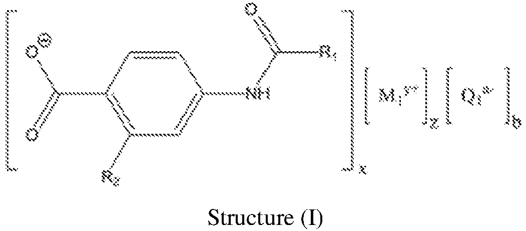 wherein R₁ in Structure (I) above is selected from the group consisting of a cyclopentyl group and moieties conforming to the chemical structure of Formula (A); R₂ is selected from the group consisting of hydrogen and a hydroxyl group; wherein Formula (A) is: 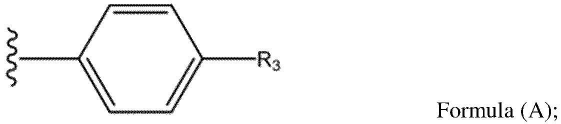 wherein R₃ in Formula (A) above is selected from the group consisting of hydrogen, a halogen, methoxy, and phenyl; x is a positive integer; wherein each M₁ in Structure (I) above is a metal cation; y is the valence of the cation; z is a positive integer; b is zero or a positive integer; when b is a positive integer, each Q₁ is a negatively-charged counterion and a is the valence of the negatively-charged counterion; and the values of x, y, z, a, and b satisfy the equation: x + (ab) = yz.

Exemplary of the nucleation agent which fall within the scope of Structure (I) above, include one or more of the following chemical compounds:
(1) sodium salt of 4-chlorophenylamido-benzoic acid having the following structure 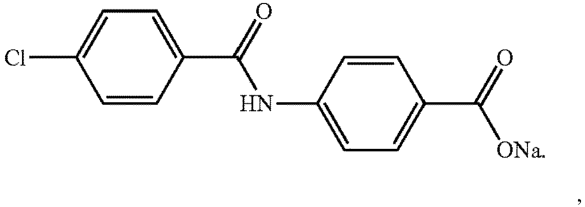
(2) lithium salt of 4-benzoylamino benzoic acid having the following structure

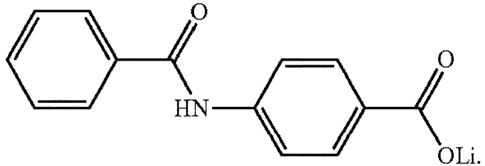

In a preferred embodiment, the nucleation agent may include, for example, sodium salt of 4-chlorophenylamido-benzoic acid having the following structure:

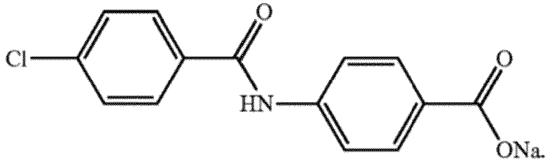

In another preferred embodiment, the nucleation agent can include commercially available compounds such as HYPERFORM^{®}HPN 210M (available from Milliken Chemical).

In one general embodiment, the concentration of the nucleation agent used in the present invention is from 0.1 wt % to 1 wt % (from 1,000 ppm to 10,000 ppm); from 0.1 wt % to 0.5 wt % (from 1,000 ppm to 5,000 ppm) in another embodiment; and from 0.15 wt % to 0.5 wt % in still another embodiment, based on the total components of the resin composition.

The thermoplastic elastomer (e.g., olefinic block copolymer) useful in the present invention includes, for example, small amounts of optional additives including plasticizers; stabilizers including viscosity stabilizers and hydrolytic stabilizers; primary and secondary antioxidants; ultraviolet light absorbers; anti-static agents; dyes, pigments, or other coloring agents; processing aids; slip additives; anti-block agents such as silica or talc; release agents; tackifying resins; or combinations of two or more of the optional components described above. In a preferred embodiment, the olefinic block copolymer may include, for example, one or more of the following optional additives: primary and secondary antioxidants; anti-block agents; and slip additives.

The nucleation agent useful in the present invention may also include an optional additive such as zinc stearate.

Generally, the thermoplastic elastomer resin composition is produced by mixing, blending (e.g., by dry blending via a tumbler blender) or compounding the thermoplastic elastomer and the nucleation agent together using conventional mixing methods and equipment known to those skilled in the art of mixing materials. For example, the nucleation agent is
added to the thermoplastic elastomer as the thermoplastic elastomer is blended using a twin-screw extruder mixer such as a ZSK-26 twin screw extruder available from Coperion GmbH. While not limited to any particular screw extruder, in one embodiment, the ZSK-26 twin extruder has the following specifications: The barrel length of the ZSK-26 twin screw extruder is 100 mm per barrel; and 15 barrels comprises the entire process section of the extruder. The screw diameter of the extruder is 25.5 mm; and the screw has a flight depth of 4.55 mm. The feed rate of feed material to the extruder is 10 lbs/hr (4.54 kg/hr), and the rotation of the screw is 200 RPM. The melt temperature in the extruder is maintained at a temperature of from 120 °C to 130 °C.

In one embodiment of the present invention, the process for making the composition includes, for example, compounding the nucleation agent and the thermoplastic elastomer (e.g., OBC) in a twin-screw extruder including passing a feed material at least one time through the extruder and two or more times through the extruder in another embodiment to make a masterbatch. Then, the masterbatch is dry blended with the thermoplastic elastomer (e.g., OBC) to make the final composition. For example, a masterbatch of the nucleation agent and the thermoplastic elastomer (e.g., OBC) is compounded using an extruder by first feeding 15 wt % of the nucleation agent and 85 wt % of the thermoplastic elastomer (e.g., OBC) as the feed materials in a first pass through the extruder resulting in a first compounded sample exiting the extruder. Then, in a second pass through the extruder, 33 wt % of the first compounded sample from the first pass is fed back into the twin extruder with 67 wt % of the same the thermoplastic elastomer (e.g., OBC) used in the first pass resulting in a second compounded sample exiting the extruder such that after the second pass, the compounded sample has a concentration of nucleation agent of 5 wt % in the thermoplastic elastomer (e.g., OBC). Then, the masterbatch is dry blended with the thermoplastic elastomer (e.g., OBC) to make the final composition, for example and not to be limited thereby, 96 wt % of the thermoplastic elastomer (e.g., OBC) is dry-blended with 4 wt % of the masterbatch to provide a composition of 2,000 ppm of the nucleation agent in the thermoplastic elastomer (e.g., OBC). The dry-blended composition can be fed into the extruder to fabricate the cast film. In an alternative embodiment, the nucleation agent can be added to the thermoplastic elastomer (e.g., OBC) in the form of a powder.

Some of the advantageous/beneficial properties exhibited by the final thermoplastic elastomer resin composition of the present invention produced according to the above-described process, includes, for example, a final resin composition having an improved: (1) hysteresis, (2) retractive force, and (3) immediate set of the cast film made from the above composition, compared to a film made from a resin composition without the nucleation agent

For example, the hysteresis property, in terms of percentage change in the property, exhibited by the composition of the present invention is generally in the range of from 3 to 15 in one embodiment; from 3.5 to 10 in another embodiment; and from 5 to 10 in still another embodiment. The hysteresis property is important and advantageous because the property maintains the elasticity of the film/sheet in applications where the film is used such as in diapers or adult incontinence articles.

For example, the retractive force property, in terms of percentage change in the property, exhibited by the composition of the present invention is generally in the range of from 3 to 15 in one embodiment; from 3 to 10 in another embodiment; and from 5 to 10 in still another embodiment. The retractive force property is important and advantageous because the property ensures that a diaper or an adult incontinence article stays firmly in place on a human body during body movement.

For example, the immediate set property, in terms of percentage change in the property, exhibited by the composition of the present invention is generally in the range of from 5 to 25 in one embodiment; from 5 to 20 in another embodiment; and from 5 to 15 in still another embodiment. The immediate set property is important and advantageous because the property prevents the slack of a diaper or an adult incontinence article after repeated stretch and release.

In general, once the thermoplastic elastomer resin composition is produced by mixing, blending or compounding the thermoplastic elastomer (e.g., OBC) and the nucleation agent together as described above, the resin composition can be used to form an elastic film member which can include one layer (a monolayer film) or two or more layers (a multilayer film). In a preferred embodiment, the elastic film comprising at least one layer, wherein the at least one layer is formed from the thermoplastic elastomer resin composition described above. The monolayer film and/or the multilayer film member can be further used to fabricate an elastic laminate member. In one embodiment, for example, the monolayer film and/or the multilayer film member can be laminated to a nonwoven substrate using conventional laminating processes.

In a broad embodiment, the monolayer film useful in the present invention includes, for example, an elastic film of one layer made from the thermoplastic elastomer resin composition described above. For example, the monolayer film can be made of an OBC (e.g., INFUSE^{™} 9100) as the thermoplastic elastomer. In a preferred embodiment, the elastic film of the present invention is a monolayer cast film or a blown film.

In another embodiment, the monolayer can be used as a first film layer and also include one or more other layers as a second layer to form a multilayer film structure. The second film layer can be made of, for example, polyethylene elastomer; polypropylene elastomer; styrene block copolymer; and mixtures thereof.

Generally, the film of the present invention is produced using the compounded thermoplastic elastomer (e.g., OBC) and nucleation agent resin composition described above, which is produced by mixing, blending or compounding the OBC and the nucleation agent together or dry blending the masterbatch and OBC as described above. For example, a monolayer of the film is produced using conventional processes and equipment known to those skilled in the art of fabricating films. In one embodiment, a conventional cast film process can be used to manufacture the film of the present invention. For example, a 3-layer cast film line (available from Collin) can be used to fabricate one or more monolayer cast films having a thickness of from 1,143 mm (4.5 mil) to 1,524 mm (6.0 mil). While not limited to any cast film line, in one embodiment, the 3-layer cast film line has the following specifications: the cast film line includes two 25:1 L/D single screw extruders with a screw diameter of 20 mm (skin layers), and one 25:1 L/D single screw extruder with a screw diameter of 30 mm (core layer). The melt temperature of the extruders is at a temperature of from 230 °C to 240 °C. The die gap of the extruders is 35 mil and the air gap of the extruders is from 1 inch (2.54 cm) to 1.5 inch (3.81 cm). The total output of the extruder is at about 4.77 kg/hr.

In one embodiment, the process includes preparing a predetermined amount of the masterbatch (nucleation agent plus olefinic block copolymer) as described above by dryblending the masterbatch with a polymer material of the elastic monolayer film such as INFUSE^{™} 9100. Then, the dry-blended material is fed into all three extruders to provide a specific nucleation agent level in the fabricated cast film. For example, in one embodiment the nucleation agent level is at 2,000 ppm of HYPERFORM^{®} HPN 210M.

Some of the advantageous/beneficial properties exhibited by the fabricated elastic monolayer film structure produced according to the above-described process, can include, for example: (1) an immediate set lower than 20 %, as measured according to the Elasticity Test Method; (2) a hysteresis value of lower than 60 %, as measured according to the Elasticity Test Method; and (3) a retractive force higher than 0.75 lbs (0.3409 kg).

For example, the film made with the composition containing the nucleation agent provides the film with several physical properties in terms of percentage change compared to a pure OBC that does not contain a nucleation agent, including (1) a retractive force percent change of at least 5 % and some embodiments > 5 %; (2) an immediate set percent change of at least 7 % and in some embodiments > 7 %; and/or (3) a hysteresis percent change of at least 3 % and in some embodiments > 3 %; as compared to a same film having no nucleation agent.

The "percentage change of retractive force" can be calculated using the following equation: $\begin{matrix}Percentage change of retractive force \\ = 100 \times \left[\frac{Retractive force of INFUSE plus nucleation agent - Retractive force of pure INFUSE}{Retractive force of pure INFUSE}\right]\end{matrix}$

The "percentage change of immediate set" can be calculated using the following equation: $\begin{matrix}Percentage change of immediate set \\ = 100 \times \left[\frac{Immediate set of pure INFUSE - Immediate set of INFUSE plus nucleation agent}{Immediate set of pure INFUSE}\right]\end{matrix}$

The "percentage change of hysteresis" can be calculated using the following equation: $\begin{matrix}Percentage change of hysteresis \\ = 100 \times \left[\frac{Hysteresis of pure INFUSE - Hysteresis of INFUSE plus nucleation agent}{Hysteresis of pure INFUSE}\right]\end{matrix}$

For example, retractive force percent change property of the monolayer film is from 3 to 15 in one embodiment; from 3 to 10 in another embodiment; and from 5 to 10 in still another embodiment.

For example, immediate set percent change property of the monolayer film is from 5 to 25 in one embodiment; from 5 to 20 in another embodiment; and from 5 to 15 in still another embodiment.

For example, hysteresis percent change property of the monolayer film is from 3 to 15 in one embodiment; from 3.5 to 10 in another embodiment; and from 5 to 10 in still another embodiment.

The above properties of immediate set, hysteresis, and retractive force are measured using an Elasticity Test Method. The Elasticity Test Method is generally performed using known equipment in the art such as an Instron instrument. The nominal gauge length of a specimen to be tested is 1 inch (2.54 cm) and the width of the specimen is 1 inch (2.54 cm). The load cell of the Instron is zeroed first and then the specimen is loaded carefully to the grip of the Instron to minimize any slack and pre-load stress. In one testing cycle (referred to as a loading and unloading process), the specimen is stretched to a strain of 100 % at a speed of 125 mm/min (loading process). After reaching 100 % strain, the specimen is held for 30 s; and then the specimen is returned to the zero-extension position at the speed of 125 mm/min (unloading process). The strain, at the point that the force reaches zero on the return step, is recorded as "immediate set". The "retractive force" is obtained at 50 % strain during the unloading step. The hysteresis is calculated using the following equation: $Hysteresis = \left[\frac{Force at 50 % strain of loading proces - retractive force}{Force at 50 % strain of loading process}\right] ∗ 100$

The thickness of the monolayer film of the present invention, can be generally from 0,0254 mm to 0,254 mm (1 mil to 10 mil) in one embodiment; and from 0,0254 mm to 0,1778 mm (1 mil to 7 mil) in another embodiment; and from 0,0762 mm to 0,1524 mm (3 mil to 6 mil) in still another embodiment.

In a preferred embodiment, the monolayer film or multilayer film described above can be used to make a laminate structure or member by laminating the monolayer film or multilayer film onto the surface of another substrate such as one or more of the following substrates: a nonwoven substrate; plastic, and mixtures thereof.

In a preferred embodiment, the laminate is made by any laminating process known in the art such as the process of stretched bonded laminate (SBL), neck bonded laminate (NBL), perforated film laminate (PFL), and ring roller.

The elastic film of the present invention can be used in applications where immediate, hysteresis, retractive force properties are desired including, for example, diapers, training pants, and adult incontinence products.

### EXAMPLES

The following examples are presented to further illustrate the present invention in detail but are not to be construed as limiting the scope of the claims. Unless otherwise stated all parts and percentages are by weight.

Various terms and designations used in the Inventive Examples (Inv. Ex.) and the Comparative Examples (Comp. Ex.) which follow are explained hereinbelow:

"GPC" stands for gel permeation chromatography.

"DSC" stands for differential scanning calorimetry.

Various ingredients, components, additives, or raw materials used in the Inv. Ex. and the Comp. Ex. which follow are explained hereinbelow:

**Table I - Raw Materials**

| Material | Brief Description | Supplier |
|---|---|---|
| INFUSE^{™} 9100 | An OBC resin having a melt index of 1.0 g/10 min and a density of 0.877 g/cm³. Tₘ = 114 °C, MWD = M_{w}/Mₙ = 2.64 | The Dow Chemical Company |
| HYPERFORM^{®} HPN-210M | A nucleation agent which has as a main component of benzoic acid, 4-[(4-chlorobenzoyl)amino], sodium salt. | Milliken Chemical |
| HYPERFORM^{®} HPN-20E | A nucleation agent which has as its main component, 1,2-cyclohexanedicarboxylic acid, calcium salt. | Milliken Chemical |
| Millad^{®} NX^{™} 8000 | A nucleation agent which has as its main component, 1,2,3-tridesoxy-4,6;5,7-bis(4-propyl benzylidene)nonitol. | Milliken Chemical |
| PTFE | Polytetrafluoroethylene | |

HYPERFORM^{®} HPN-210M has the following chemical structure:

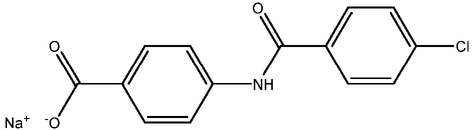

HYPERFORM^{®} HPN-20E has the following chemical structure:

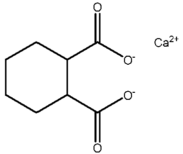

Millad^{®} NX^{™} 8000 has the following chemical structure:

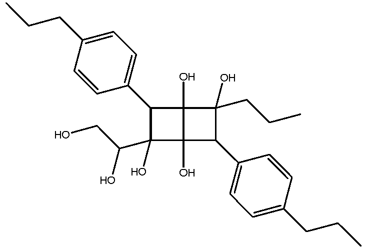

Polytetrafluoroethylene (PTFE) used in the examples has the following structure:

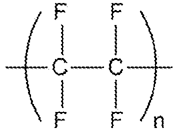

### Examples 1 - 3 and Comparative Examples A-F - Composition Production

### General Procedure for Producing a Resin Composition

The compositions described in Table II were prepared as follows: A masterbatch of a nucleation agent and a thermoplastic elastomer, such as olefinic block copolymer, is compounded using an extruder by first feeding 15 wt % of the nucleation agent and 85 wt % of the olefinic block copolymer as the feed materials in a first pass through the extruder resulting in a first compounded sample exiting the extruder. Then, in a second pass through the extruder, 33 wt % of the first compounded sample from the first pass is fed back into the twin extruder with 67 wt % of the same olefinic block copolymer used in the first pass resulting in a second compounded sample exiting the extruder such that after the second pass, the compounded sample has a concentration of nucleation agent of 5 wt % in the olefinic block copolymer. Then the masterbatch is dry blended with the olefinic block copolymer to make the final composition. For example, 96 wt % of OBC is dry-blended with 4 wt % of the masterbatch to provide 2,000 ppm of the nucleation agent in OBC. The dry-blended composition can be fed into the extruder to fabricate the cast film.

The twin-screw extruder used for compounding is a ZSK-26 twin screw extruder (available from Coperion GmbH). The barrel length of the ZSK-26 twin screw extruder is 100 mm per barrel; and 15 barrels comprises the entire process section of the extruder. The screw diameter of the extruder is 25.5 mm; and the screw has a flight depth of 4.55 mm. The feed rate of feed material to the extruder is 10 lbs/hr (4.54 kg/hr), and the rotation of the screw is 200 RPM. The melt temperature in the extruder is maintained at a temperature of from 120 °C to 130 °C.

**Table II - Compositions**

| Ingredient | Composition Example No. | | | | | | | | |
|---|---|---|---|---|---|---|---|---|---|
| | Inv. Ex. 1 | Inv. Ex. 2 | Inv. Ex. 3 | Comp. Ex. A | Comp. Ex. B | Comp. Ex. C | Comp. Ex. D | Comp. Ex. E | Comp. Ex. F |
| INFUSE^{™} 9100, wt %: | 99.8 | 99.85 | 99.9 | 99.95 | 99.8 | 99.8 | 99.8 | | |
| HYPERFORM^{®} HPN 210M, ppm: | 2,000 | 1,500 | 1,000 | 500 | | | | | |
| HYPERFORM^{®} HPN 20E, ppm: | | | | | 2,000 | | | | |
| Millad NX^{™} 8000, ppm: | | | | | | 2,000 | | | |
| PTFE, ppm: | | | | | | | 2,000 | | |
| INFUSE ^{™} 9100, wt %: | | | | | | | | 100 | 100 |

### Example 4-6 and Comparative Examples G-L - Films

### General Procedure for Producing a Monolayer Film

The film structures described in Table III were manufactured using a cast film process. For example, a 3-layer cast film line (available from Collin) can be used to fabricate one or more monolayer cast films having a thickness of from 1,143 mm to 0,1524 mm (4.5 mil to 6.0 mil). While not limited to any cast film line, in one embodiment, the 3-layer cast film line has the following specifications: the cast film line comprises two 25:1 L/D single screw extruders with a screw diameter of 20 mm (skin layers), and one 25:1 L/D single screw extruder with a screw diameter of 30 mm (core layer). The melt temperature of the extruders is at a temperature of from 230 °C to 240 °C. The die gap of the extruders is 0,889 mm (35 mil) and the air gap of the extruders is from 25,4 mm to 381 mm (1 inch to 1.5 inch). The total output of the extruder is at about 4.77 kg/hr.

In one embodiment, the process includes preparing a predetermined amount of the masterbatch (nucleation agent plus olefinic block copolymer) as described above by dryblending the masterbatch with a polymer material of the elastic monolayer film such as INFUSE ^{™} 9100. Then, the dry-blended material is fed into all three extruders to provide a specific nucleation agent level in the fabricated cast film. For example, in one embodiment the nucleation agent level is at 2,000 ppm of HYPERFORM^{®} HPN 210M.

**Table III - Raw Data for Films**

| Film Example No. | Composition Example No. Used to Make Film | Film Thickness Range (mil) | Retractive Force (lbs [kg]) | Immediate Set (%) | Hysteresis (%) |
|---|---|---|---|---|---|
| Inv. Ex. 4 | Inv. Ex. 1 | 5.5-6.0 | 0.91 [0.41] | 17.03 | 58.09 |
| Inv. Ex. 5 | Inv. Ex. 2 | 4.5-5.0 | 0.80 [0.36] | 13.5 | 51.6 |
| Inv. Ex. 6 | Inv. Ex. 3 | 4.5-5.0 | 0.79 [0.35] | 13.6 | 51.5 |
| Comp. Ex. G | Comp. Ex. A | 4.5-5.0 | 0.74 [0.33] | 14.6 | 53.5 |
| Comp. Ex.H | Comp. Ex. B | 5.5-6.0 | 0.80 [0.36] | 19.72 | 65.26 |
| Comp. Ex. I | Comp. Ex. C | 5.5-6.0 | 0.83 [0.37] | 18.94 | 61.87 |
| Comp. Ex. J | Comp. Ex. D | NP* | NP | NP | NP |
| Comp. Ex. K | Comp. Ex. E | 5.5-6.0 | 0.86 [0.39] | 19.78 | 63.70 |
| Comp. Ex. L | Comp. Ex. F | 4.5-5.0 | 0.75 [0.34] | 14.9 | 53.5 |

| | | | | | |
|---|---|---|---|---|---|
| Note for Table III: *"NP" stands for "not processable". | | | | | |

### TEST METHODS

### Density

Density measurements are performed using the procedure described in ASTM D792.

### Melt Index

Melt index measurements are performed using the procedure described in ASTM D1238.

### GPC

GPC measurements were performed using a chromatographic system consisting of a PolymerChar GPC-IR (Valencia, Spain) high temperature GPC chromatograph equipped with an internal IR5 infrared detector (IR5). The autosampler oven compartment was set at 160 °C and the column compartment was set at 150 °C. The columns used were 4 Agilent "Mixed A" 30 cm 20-µm linear mixed-bed columns and a 20-µm pre-column. The chromatographic solvent used was 1,2,4 trichlorobenzene and contained 200 ppm of butylated hydroxytoluene (BHT). The solvent source was nitrogen sparged. The injection volume used was 200 µL and the flow rate was 1.0 mL/min.

Calibration of the GPC column set was performed with 21 narrow molecular weight distribution polystyrene standards with molecular weights ranging from 580 to 8,400,000 and were arranged in 6 "cocktail" mixtures with at least a decade of separation between individual molecular weights. The standards were purchased from Agilent Technologies. The polystyrene standards were prepared at 0.025 g in 50 mL of solvent for molecular weights 1,000,000, and 0.05 g in 50 mL of solvent for molecular weights < 1,000,000. The polystyrene standards were dissolved at 80 °C with gentle agitation for 30 min. The polystyrene standard peak molecular weights were converted to polyethylene molecular weights using the following Equation I (as described in Williams and Ward, J. Polym. Sci., Polym. Let., 6, 621 (1968)):$M_polyethylene = A \times {\left(M_polyethylene\right)}^{∧} B$ (Equation I) where M is molecular weight, A has a value of 0.4315 and B is equal to 1.0.

A fifth order polynomial was used to fit the respective polyethylene-equivalent calibration points. A small adjustment to A (from approximately 0.375 to 0.445) was made to correct for column resolution and band-broadening effects such that linear homopolymer polyethylene standard is obtained at 120,000 Mw.

The total plate count of the GPC column set was performed with decane (prepared at 0.04 g in 50 milliliters of trichlorobenzene and dissolved for 20 min with gentle agitation.) The plate count (Equation II) and symmetry (Equation III) were measured on a 200 µL injection according to the following equations: $Plate Count = 5.54 ∗ \left({\left(\left(RV_\left(Peak Max\right)\right)/\left(Peak Width at 1/2 height\right)\right)}^{∧}2\right.$ (Equation II) where RV is the retention volume in milliliters, the peak width is in milliliters, the peak max is the maximum height of the peak, and ½ height is ½ height of the peak maximum. $Symmetry = \frac{\left(Rear Peak \left〚RV\right〛_\left(one tenth height\right)-\left〚RV\right〛_\left(Peak max\right)\right)}{\left({RV}_{Peak max}-Front Peak {RV}_{one tenth height}\right)}$ (Equation III) where RV is the retention volume in milliliters and the peak width is in milliliters, Peak max is the maximum position of the peak, one tenth height is 1/10 height of the peak maximum, and where rear peak refers to the peak tail at later retention volumes than the peak max and where front peak refers to the peak front at earlier retention volumes than the peak max. The plate count for the chromatographic system should be greater than 18,000 and symmetry should be between 0.98 and 1.22.

Samples were prepared in a semi-automatic manner with the PolymerChar "Instrument Control" Software, wherein the samples were weight-targeted at 2 mg/ml, and the solvent (contained 200 ppm BHT) was added to a pre nitrogen-sparged septa-capped vial, via the PolymerChar high temperature autosampler. The samples were dissolved for 2 hr at 160 °C under "low speed" shaking.

The calculations of Mn(GPC), Mw(GPC), and Mz(GPC) were based on GPC results using the internal IR5 detector (measurement channel) of the PolymerChar GPC-IR chromatograph according to Equations IV-VI, using PolymerChar GPCOne^{™} software, the baseline-subtracted IR chromatogram at each equally-spaced data collection point (i), and the polyethylene equivalent molecular weight obtained from the narrow standard calibration curve for the point (i) from Equation I. ${Mn}_{\left(GPC\right)} = \frac{{Σ}^{i} {IR}_{i}}{{Σ}^{i} \left(\frac{{IR}_{i}}{{M}_{{polyethylene}_{i}}}\right)}$ (Equation IV) ${Mw}_{\left(GPC\right)} = \frac{{Σ}^{i} \left({IR}_{i}∗{M}_{{polyethylene}_{i}}\right)}{{Σ}^{i} {IR}_{i}}$ (Equation V) ${Mz}_{\left(GPC\right)} = \frac{{Σ}^{i} \left({IR}_{i}∗{{M}_{{polyethylene}_{i}}}^{2}\right)}{{Σ}^{i} \left({IR}_{i}∗{M}_{{polyethylene}_{i}}\right)}$ (Equation VI)

In order to monitor the deviations over time, a flowrate marker (decane) was introduced into each sample via a micropump controlled with the PolymerChar GPC-IR system. This flowrate marker (FM) was used to linearly correct the pump flowrate (Flowrate (nominal)) for each sample by RV alignment of the respective decane peak within the sample (RV (FM Sample)) to that of the decane peak within the narrow standards calibration (RV (FM Calibrated)). Any changes in the time of the decane marker peak are then assumed to be related to a linear-shift in flowrate (Flowrate (effective)) for the entire run. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system based on a flow marker peak, the effective flowrate (with respect to the narrow standards calibration) is calculated as Equation VII. Processing of the flow marker peak was done via the PolymerChar GPCOne^{™} Software. Acceptable flowrate correction is such that the effective flowrate should be within +/-1% of the nominal flowrate. $Flowrate \left(effective\right) = Flowrate \left(nominal\right) * \left(RV \left(FM Calibrated\right)/RV \left(FM Sample\right)\right)$ (Equation VII)

### DSC

Differential scanning calorimetry (DSC) was performed on a TA Instruments Discovery DSC equipped with an RCS cooling unit and an autosampler. A nitrogen purge gas flow of 50 mL/min was used. The sample was pressed into a thin film at 190 °C on a Carver Hydraulic press. About 3-10 mg of material was cut from the pressed film, weighed, and placed in a light aluminum pan, and crimped shut. The thermal behavior of the samples was investigated using the following temperature profile: the sample was rapidly heated to 180 °C and held isothermally for 3 min. The sample was then cooled to -90 °C at 10 °C/min and held isothermally for 3 min. The sample was then heated to 150 °C at 10 °C/min. The cooling and second heading curves were used for analysis.

### Elasticity Test Method

The Elasticity Test Method, described above, was performed using an Instron. The nominal gauge length of the specimen to be tested is 1 inch and the width of the specimen to be tested is 1 inch. The load cell was zeroed first and then the specimen was loaded carefully to the grip of Instron to minimize the slack and pre-load stress. In one testing cycle (called loading and unloading process), the specimen was stretched to the strain of 100 % at the speed of 125 mm/min (loading process). After reaching 100 % strain, the specimen was held for 30 s and then returned to the zero-extension position at the speed of 125 mm/min (unloading process). The strain at point the force reaches zero on the return step is recorded as immediate set. The retractive force is obtained at 50 % strain during the unloading step. The hysteresis is calculated from the equation below. $Hysteresis = \left[\frac{Force at 50 % strain of loading proces - retractive force}{Force at 50 % strain of loading process}\right] ∗ 100$

The results of the Elasticity Test Method performed on the film samples in terms of "percentage change" of refractive force, immediate set and hysteresis are described in Table IV.

**Table IV - Results**

| Film Example No. | Percentage change of refractive force (vs. pure [virgin] INFUSE^{™} 9100) | Percentage change of immediate set (vs. pure [virgin] INFUSE^{™} 9100) | Percentage change of hysteresis (vs. pure [virgin] INFUSE^{™} 9100) |
|---|---|---|---|
| Inv. Ex. 4 | 5.8 | 13.9 | 8.8 |
| Inv. Ex. 5 | 6.7 | 9.4 | 3.6 |
| Inv. Ex. 6 | 5.3 | 8.7 | 3.7 |
| Comp. Ex. G | -1.3 | 2.0 | 0 |
| Comp. Ex. H | -6.9 | 0.3 | -2.4 |
| Comp. Ex. I | -3.4 | 4.2 | 2.9 |
| Comp. Ex. J | NP* | NP | NP |
| Comp. Ex. K | 0.0 | 0.0 | 0.0 |
| Comp. Ex. L | 0.0 | 0.0 | 0.0 |

| | | | |
|---|---|---|---|
| Note for Table IV: *"NP" stands for "not processable". | | | |

## Claims

1. A thermoplastic elastomer resin composition for forming an elastic film comprising: (a) at least 75 weight percent of at least one thermoplastic elastomer having a density of from 0.855 g/cm³ to 0.890 g/cm³, measured using the procedure described in ASTM D792, and a melt index (I2) of from 0.5 g/10 min to 15 g/10 min, measured using the procedure described in ASTM D1238; and (b) from 0.1 weight percent to 1.0 weight percent of at least one nucleation agent having the structure: 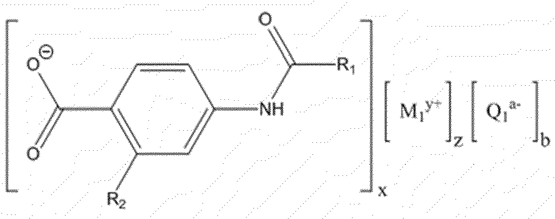 wherein R₁ is selected from the group consisting of a cyclopentyl group and moieties conforming to the structure of Formula (A); R₂ is selected from the group consisting of hydrogen and a hydroxyl group; Formula (A) is 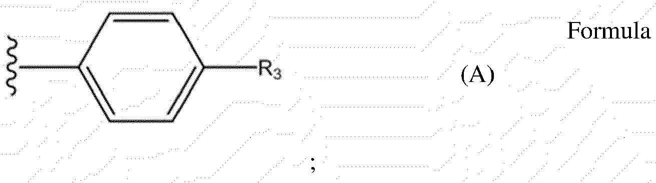 R₃ is selected from the group consisting of hydrogen, a halogen, methoxy, and phenyl; x is a positive integer; each M₁ is a metal cation; y is the valence of the cation; z is a positive integer; b is zero or a positive integer; when b is a positive integer, each Q₁ is a negatively-charged counterion and a is the valence of the negatively-charged counterion; and the values of x , y , z , a, and b satisfy the equation: x + (ab) = yz.

2. The elastic film-forming composition of claim 1, wherein the thermoplastic elastomer is an olefinic block copolymer.

3. The elastic film-forming composition of claim 2, wherein the olefinic block copolymer has a density of 0.855 grams per cubic centimeter to 0.890 grams per cubic centimeter, measured using the procedure described in ASTM D792; wherein the olefinic block copolymer has a molecular weight distribution of M_{w}/Mₙ greater than 1.0 but lower than 4.0; and wherein the olefinic block copolymer has at least one melting point (Tₘ in Celsius) that corresponds to the following relationship (density is in grams per cubic centimeter): ${T}_{m} > - 2002.9 + 4538.5 * \left(density\right) - 2422.2 * {\left(density\right)}^{2} .$

4. The elastic film-forming composition of claim 2, wherein the concentration of the olefinic block copolymer present in the composition is at least 75 weight percent; and wherein the concentration of the nucleation agent is from 0.1 weight percent to 1.0 weight percent.

5. The elastic film-forming composition of claim 1, wherein R₁ is a moiety conforming to the structure of Formula (A), R₂ is hydrogen, R₃ is chloride or a methoxy group, and M₁ is a sodium, zinc, or calcium cation.

6. The elastic film-forming composition of claim 1, wherein the nucleation agent is benzoic acid, 4-[(4-chlorobenzoyl)amino], sodium salt having the following chemical structure:

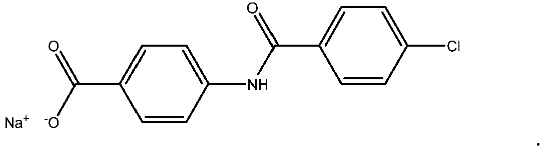

7. An elastic film comprising at least one layer, wherein the at least one layer is formed from a composition of claim 1.

8. The elastic film of claim 7, wherein the thermoplastic elastomer is an olefinic block copolymer having a density of 0.870 grams per cubic centimeter to 0.890 grams per cubic centimeter, measured using the procedure described in ASTM D792; having a molecular weight distribution of M_{w}/Mₙ greater than 1.0 but lower than 4.0; and having at least one melting point (Tₘ in Celsius) that corresponds to the relationship (density is in grams per cubic centimeter): ${T}_{m} > - 2002.9 + 4538.5 * \left(density\right) - 2422.2 * {\left(density\right)}^{2} .$

9. The elastic film of claim 7, wherein the olefinic block copolymer is a polyethylene block copolymer.

10. The elastic film of claim 7, wherein the film exhibits: (i) a retractive force percent change of at least 5 percent (ii) an immediate set percent change of at least 7 percent and/or (iii) a hysteresis percent change of at least 3 percent, as compared to a same film having no nucleation agent; and as measured according to the Elasticity Test Method as disclosed in the description.

11. The elastic film of claim 7, wherein the film is a monolayer cast film.

12. The elastic film of claim 7, wherein the film is a multilayer film including a first layer of a monolayer cast film; and at least one second layer of a different polymeric film.

13. An elastic laminate comprising the film according to claim 7 laminated to a nonwoven substrate.

## Patentansprüche

1. Thermoplastische Elastomerharzzusammensetzung zum Ausbilden eines elastischen Films, umfassend: (a) zu mindestens 75 Gewichtsprozent mindestens ein thermoplastisches Elastomer, das eine Dichte von 0,855 g/cm³ bis 0,890 g/cm³, gemessen unter Verwendung des in ASTM D792 beschriebenen Verfahrens, und einen Schmelzindex (I2) von 0,5 g/10 min bis 15 g/10 min aufweist, gemessen unter Verwendung des in ASTM D1238 beschriebenen Verfahrens; und (b) zu 0,1 Gewichtsprozent bis 1,0 Gewichtsprozent mindestens ein Nukleierungsmittel, das die Struktur aufweist: 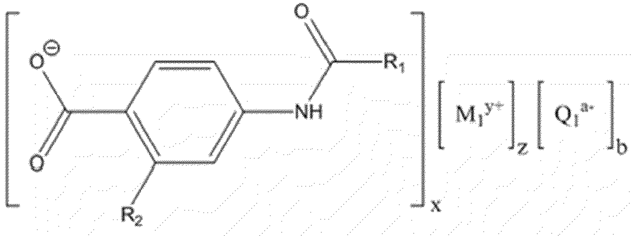 wobei R₁ aus der Gruppe ausgewählt ist, bestehend aus einer Cyclopentylgruppe und Resten, die mit der Struktur der Formel (A) übereinstimmen; R₂ aus der Gruppe ausgewählt ist, bestehend aus Wasserstoff und einer Hydroxylgruppe; Formel (A) ist 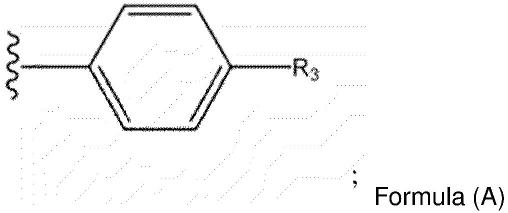 R₃ aus der Gruppe ausgewählt ist, bestehend aus Wasserstoff, einem Halogen, Methoxy und Phenyl; x eine positive ganze Zahl ist; jedes M₁ ein Metallkation ist; y die Wertigkeit des Kations ist; z eine positive ganze Zahl ist; b null oder eine positive ganze Zahl ist; wenn b eine positive ganze Zahl ist, jedes Q₁ ein negativ geladenes Gegenion ist und a die Wertigkeit des negativ geladenen Gegenions ist; und die Werte von x, y, z, a und b die Gleichung erfüllen: $x + \left(ab\right) = yz .$

2. Elastische filmbildende Zusammensetzung nach Anspruch 1, wobei das thermoplastische Elastomer ein olefinisches Blockcopolymer ist.

3. Elastische filmbildende Zusammensetzung nach Anspruch 2, wobei das olefinische Blockcopolymer eine Dichte von 0,855 Gramm pro Kubikzentimeter bis 0,890 Gramm pro Kubikzentimeter aufweist, gemessen unter Verwendung des in ASTM D792 beschriebenen Verfahrens; wobei das olefinische Blockcopolymer eine Molekulargewichtsverteilung von M_{w}/Mₙ größer als 1,0, jedoch kleiner als 4,0 aufweist; und wobei das olefinische Blockcopolymer mindestens einen Schmelzpunkt (Tₘ in Celsius) aufweist, der der folgenden Beziehung entspricht (Dichte ist in Gramm pro Kubikzentimeter): ${T}_{m} > - 2002 , 9 + 4538 , 5 * \left(Dichte\right) - 2422 , 2 * {\left(Dichte\right)}^{2} .$

4. Elastische filmbildende Zusammensetzung nach Anspruch 2, wobei die Konzentration des in der Zusammensetzung vorhandenen olefinischen Blockcopolymers mindestens 75 Gewichtsprozent beträgt; und wobei die Konzentration des Nukleierungsmittels von 0,1 Gewichtsprozent bis 1,0 Gewichtsprozent beträgt.

5. Elastische filmbildende Zusammensetzung nach Anspruch 1, wobei R₁ ein Rest ist, der mit der Struktur der Formel (A) übereinstimmt, R₂ Wasserstoff ist, R₃ Chlorid oder eine Methoxygruppe ist und M₁ ein Natrium-, Zink- oder Calciumkation ist.

6. Elastische filmbildende Zusammensetzung nach Anspruch 1, wobei das Nukleierungsmittel Benzoesäure, 4-[(4-Chlorbenzoyl)amino], Natriumsalz ist, das die folgende chemische Struktur aufweist:

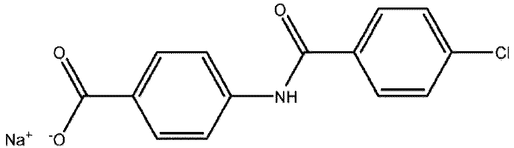

7. Elastischer Film, umfassend mindestens eine Lage, wobei die mindestens eine Lage aus einer Zusammensetzung nach Anspruch 1 ausgebildet ist.

8. Elastischer Film nach Anspruch 7, wobei das thermoplastische Elastomer ein olefinisches Blockcopolymer ist, das eine Dichte von 0,870 Gramm pro Kubikzentimeter bis 0,890 Gramm pro Kubikzentimeter aufweist, gemessen unter Verwendung des in ASTM D792 beschriebenen Verfahrens; eine Molekulargewichtsverteilung M_{w}/Mₙ von größer als 1,0, jedoch kleiner als 4,0 aufweist; und mindestens einen Schmelzpunkt (Tₘ in Celsius) aufweist, der der Beziehung entspricht (Dichte ist in Gramm pro Kubikzentimeter): ${T}_{m} > - 2002 , 9 + 4538 , 5 * \left(Dichte\right) - 2422 , 2 * {\left(Dichte\right)}^{2} .$

9. Elastischer Film nach Anspruch 7, wobei das olefinische Blockcopolymer ein Polyethylen-Blockcopolymer ist.

10. Elastischer Film nach Anspruch 7, wobei der Film vorweist: (i) eine prozentuale Änderung der Rückstellkraft von mindestens 5 Prozent (ii) eine prozentuale Änderung der Sofortverformung von mindestens 7 Prozent und/oder (iii) eine prozentuale Änderung der Hysterese von mindestens 3 Prozent, im Vergleich zu einem gleichen Film ohne Nukleierungsmittel; und wie gemäß der Elastizitätstestmethode gemessen, wie in der Beschreibung offenbart.

11. Elastischer Film nach Anspruch 7, wobei der Film ein gegossener Monolagenfilm ist.

12. Elastischer Film nach Anspruch 7, wobei der Film ein mehrlagiger Film ist, der eine erste Lage eines gegossenen Monolagenfilms einschließt; und mindestens eine zweite Lage aus einem anderen Polymerfilm.

13. Elastisches Laminat, umfassend den Film nach Anspruch 7, der auf ein Vliessubstrat laminiert ist.

## Revendications

1. Composition de résine élastomère thermoplastique permettant de former un film élastique comprenant : (a) au moins 75 pour cent en poids d'au moins un élastomère thermoplastique ayant une masse volumique allant de 0,855 g/cm³ à 0,890 g/cm³, mesurée à l'aide de la procédure décrite dans ASTM D792, et un indice de fusion (I2) allant de 0,5 g/10 min à 15 g/10 min, mesuré à l'aide de la procédure décrite dans ASTM D1238 ; et (b) de 0,1 pour cent en poids à 1,0 pour cent en poids d'au moins un agent de nucléation ayant la structure : 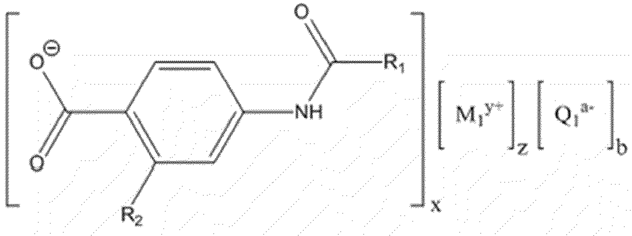 dans laquelle R₁ est choisi dans le groupe constitué d'un groupe cyclopentyle et de fragments répondant à la structure de Formule (A) ; R₂ est choisi dans le groupe constitué d'hydrogène et d'un groupe hydroxyle ; la Formule (A) est 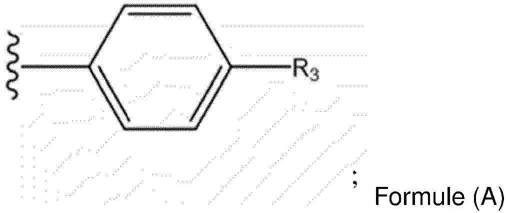 R₃ est choisi dans le groupe constitué d'hydrogène, d'un halogène, de méthoxy et de phényle ; x est un nombre entier positif ; chaque M₁ est un cation métallique ; y est la valence du cation ; z est un nombre entier positif ; b est zéro ou un nombre entier positif ; lorsque b est un nombre entier positif, chaque Q₁ est un contre-ion chargé négativement et a est la valence du contre-ion chargé négativement ; et les valeurs de x, y, z, a et b respectent l'équation : x + (ab) = yz.

2. Composition de formation de film élastique selon la revendication 1, dans laquelle l'élastomère thermoplastique est un copolymère séquencé oléfinique.

3. Composition de formation de film élastique selon la revendication 2, dans laquelle le copolymère séquencé oléfinique a une masse volumique de 0,855 gramme par centimètre cube à 0,890 gramme par centimètre cube, mesurée à l'aide de la procédure décrite dans ASTM D792 ; dans laquelle le copolymère séquencé oléfinique a une distribution de masses moléculaires de M_{w}/Mₙ supérieure à 1,0 mais inférieure à 4,0 ; et dans laquelle le copolymère séquencé oléfinique a au moins un point de fusion (Tₘ en Celsius) qui correspond à la relation suivante (la masse volumique est en grammes par centimètre cube) : ${T}_{m} > - 2002 , 9 + 4538 , 5 * \left(masse volumique\right) - 2422 , 2 * {\left(masse volumique\right)}^{2} .$

4. Composition de formation de film élastique selon la revendication 2, dans laquelle la concentration du copolymère séquencé oléfinique présent dans la composition est d'au moins 75 pour cent en poids ; et dans laquelle la concentration de l'agent de nucléation va de 0,1 pour cent en poids à 1,0 pour cent en poids.

5. Composition de formation de film élastique selon la revendication 1, dans laquelle R₁ est un fragment répondant à la structure de Formule (A), R₂ est hydrogène, R₃ est chlorure ou un groupe méthoxy, et M₁ est un cation sodium, zinc ou calcium.

6. Composition de formation de film élastique selon la revendication 1, dans laquelle l'agent de nucléation est de l'acide benzoïque, 4-[(4-chlorobenzoyl)amino], sel de sodium ayant la structure chimique suivante :

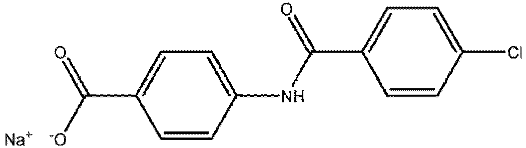

7. Film élastique comprenant au moins une couche, dans lequel l'au moins une couche est formée à partir d'une composition selon la revendication 1.

8. Film élastique selon la revendication 7, dans lequel l'élastomère thermoplastique est un copolymère séquencé oléfinique ayant une masse volumique de 0,870 gramme par centimètre cube à 0,890 gramme par centimètre cube, mesurée à l'aide de la procédure décrite dans ASTM D792 ; ayant une distribution de masses moléculaires de M_{w}/Mₙ supérieure à 1,0 mais inférieure à 4,0 ; et ayant au moins un point de fusion (Tₘ en Celsius) qui correspond à la relation (la masse volumique est en grammes par centimètre cube) : ${T}_{m} > - 2002 , 9 + 4538 , 5 * \left(masse volumique\right) - 2422 , 2 * {\left(masse volumique\right)}^{2} .$

9. Film élastique selon la revendication 7, dans lequel le copolymère séquencé oléfinique est un copolymère séquencé de polyéthylène.

10. Film élastique selon la revendication 7, dans lequel le film présente : (i) un pourcentage de changement de force de rétraction d'au moins 5 pour cent (ii) un pourcentage de changement de prise immédiate d'au moins 7 pour cent et/ou (iii) un pourcentage de changement d'hystérésis d'au moins 3 pour cent, par comparaison avec un même film n'ayant aucun agent de nucléation ; et comme mesuré selon le procédé de test d'élasticité tel que décrit dans la description.

11. Film élastique selon la revendication 7, dans lequel le film est un film coulé monocouche.

12. Film élastique selon la revendication 7, dans lequel le film est un film multicouche comportant une première couche d'un film coulé monocouche ; et au moins une seconde couche d'un film polymère différent.

13. Stratifié élastique comprenant le film selon la revendication 7, stratifié à un substrat non tissé.
